# EUROPEAN PATENT APPLICATION

(11) **EP 1 370 100 A1**
(43) Date of publication of application: **10.12.2003**
(21) Application number: 02291354.5
(22) Date of filing: 04.06.2002
(51) Int. Cl.: H04Q 7/34

(54) **Method and system for remotely controlling a network element by a mobile terminal**

(71) Applicant: ALCATEL, 75008 Paris (FR)
(72) Inventor: Fumagalli, Aurelio, 23876 Monticello Brianza (Lecco) (IT); Fossati, Vittorio, 20061 Carugate (Milano) (IT); Cividini, Serena, 24123 Bergamo (IT)
(74) Representative: Lamoureux, Bernard

(57) **Abstract**

It is disclosed a method for managing an element of a telecommunication network through a craft terminal using a telephone network. The method is characterized in that it comprises the step of connecting either the network element or the craft terminal by a mobile terminal and in that said telephone network comprises a mobile telephone network. A system is also disclosed for implementing the above method.

## Description

The present invention relates to the telecommunication field and in particular to the installation and managing of Network Elements. More in particular, it relates to a method for remotely controlling a Network Element by a mobile terminal.

As it is known, telecommunication signals are presently transmitted through a telecommunication network. The present telecommunication networks have different configurations, such as linear, ring, mesh... The simplest telecommunication network comprises a single link connecting a first network element and a second network element. This could be, for instance, the case of a radio link connecting two sites where two corresponding network elements, namely two radio transceivers, are provided. Radio signals are transmitted through the air from the first radio transceiver to the second radio transceiver.

The installation of a Network element (NE) requires an external system in order to manage the configuration and monitor the activities thereof. Such an external system comprises a Craft Terminal. The Craft Terminal (CT) is a terminal for locally managing the network elements that are connected/attached thereto. The Craft Terminal provides for local functions that allow on site operations, configuration, maintenance and repairing activities.

The following features and functions are directly accessible from the interface of a craft terminal equipment: status display (alarms, performance counters) and configuration parameter commands. The object of the Craft Terminal is to provide customers with facilities in order to manage very small networks.

The present arrangement architecture provides for connecting a Craft Terminal to a Network Element by a standard physical serial cable. This solution is rather simple and has the advantage to operate in a satisfactory manner. Unfortunately, such a solution has the disadvantage to require the presence of a technical operator at the place where the network element is physically installed. As one can easily understand, this results in very high costs because, from one side, the installation site could be difficult to be reached, especially in case of wireless network elements, and on the other side one technical operator could operate only one craft terminal.

A further known arrangement of craft terminal and network element is the one wherein both the network element and the craft terminal are connected to a respective modem device and the modems are in turn connected one to each other through a fixed telephone network. Therefore, through this arrangement, the Network Element can be remotely connected to a craft terminal using two lines of fixed telephone network and a pair of modems.

This remote management solution is advantageous because there is no more the need to have a technical operator at the site where the Network Element is installed. On the other side, the disadvantage of this solution lies in the need to have a fixed telephone line on site. Sometimes, particularly for microwave radio Network Element sites, a fixed line is not available or it is not directly accessible for use thereof.

In view of the above shortcomings, the main object of the present invention is to provide a new method for remotely managing a Network Element through a Craft Terminal, namely a new method for managing a Network Element through a Craft Terminal which is not placed at the same site of the Network Element to manage, which method is free of the inconveniences of the prior art.

A further object of the present invention is to provide a method for remotely managing a Network Element through a Craft Terminal without using a fixed telephone line and a fixed telephone network.

Profitably, the network element to be managed is a wireless apparatus for providing a radio link connection. Very often such apparatus are placed in areas that are extremely difficult to be reached and wherein fixed telephone lines are not available.

A further object of the present invention is to provide a system for remotely managing a Network Element through a Craft Terminal, in particular for managing a Network Element through a Craft Terminal without using a fixed telephone line and a fixed telephone network.

These and further objects are obtained by the method and system according to the present invention having the features of claims 1 and 5, respectively.

The basic idea of the present invention is using mobile phones and associated mobile networks. The solution results in being flexible and overcomes all the disadvantages and shortcomings of the known solutions.

There now follows a detailed description of the present invention, given merely as an exemplifying and non limiting example, to be read having reference to the attached figures of drawings, wherein:
- Fig. 1 schematically shows a simple network and a Craft Terminal connected to a Network Element for managing the network according to the present invention;
- Fig. 2 schematically shows a Craft Terminal connected to a Network Element for managing it, the Craft Terminal and the Network Element being connected one to each other through a fixed telephone network, according a second known arrangement;
- Fig. 3 schematically shows a first arrangement, according to the present invention, for connecting a Craft Terminal and a Network Element of a telecommunication network (not shown);
- Fig. 4 schematically shows a second arrangement, according to the present invention, for connecting a Craft Terminal and a Network Element of a telecommunication network (not shown); and
- Fig. 5 schematically shows a third arrangement, according to the present invention, for connecting a Craft Terminal and a Network Element of a telecommunication network (not shown).

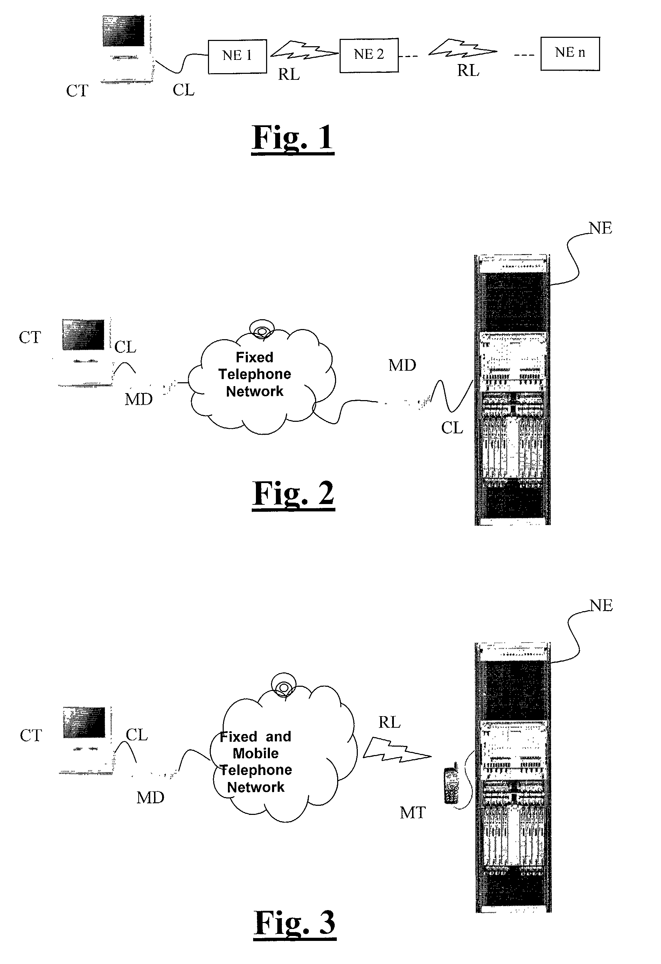

In Fig. 1 a simple network is schematically shown, the network comprising a number of Network Elements (NE#1, NE#2,... NE#n), for instance point-to-point radio network elements. One Network Element (NE#1) is connected to a Craft Terminal CT. According to this state of the art arrangement, the connection between the Craft Terminal and the network element is provided through a cable link and this results in the above listed drawbacks.

In Fig. 2 a further known connection arrangement is shown. Only a single network element is shown for clarity reasons. In this further known arrangement a first modem MD#1 is connected to the Craft Terminal CT and a second modem MD#2 is connected to the Network Element NE. The connection of the two modems is provided through an existing fixed telephone network. Also with this known solution there are a number of disadvantages as above mentioned.

The arrangement according to the present invention introduces, in addition to the fixed telephone network line, the use of mobile phones and associated mobile network. The solution is flexible and it may be differently arranged according to the needs. The absence of a fixed telephone line may be at Craft Terminal side, at Network Element side or both.

At present, the use of cellular (or mobile) GSM phones for data transmissions is limited to Internet accesses. In other words, for connecting to an Internet Provider and accessing Internet, it is possible to use a Personal Computer to be connected to such a GSM terminal. This arrangement being an alternative to a standard connection through a modem (either internal or external to the PC) and a fixed telephone network. According to the present invention, a data connection is provided through at least a mobile phone at one side and a telephone network, with a telecommunication apparatus being at the other side. The telecommunication apparatus being a radio network element being connected to a Craft Terminal.

According to the present invention, the Network Element characteristics and the set-up procedure offer the possibility to have the Craft Terminal remotely connected using a mobile phone on one side and a fixed telephone line on the other side or pair of mobile phones.

The first embodiment according to the present invention is shown in Fig. 3. The arrangement according to this embodiment comprises a Craft Terminal CT and a Network Element NE (the rest of the network being not shown for clarity reasons); the Craft Terminal is connected to a modem while the Network Element NE is connected to a mobile terminal MT. In this manner, the Network Element and the Craft Terminal are connected by a telecommunication network comprising a mobile telephone network and, possibly, a fixed telephone network.

The main advantage of this first embodiment is that those Network Elements that are placed in difficult to reach areas could become easily connected to the corresponding Craft Terminal also when the fixed telephone line is not available. Furthermore, there is no need to have an operator working at the place where the Network Element is placed. On the other side, the Craft Terminal may be connected, if it is available, by a fixed telephone line.

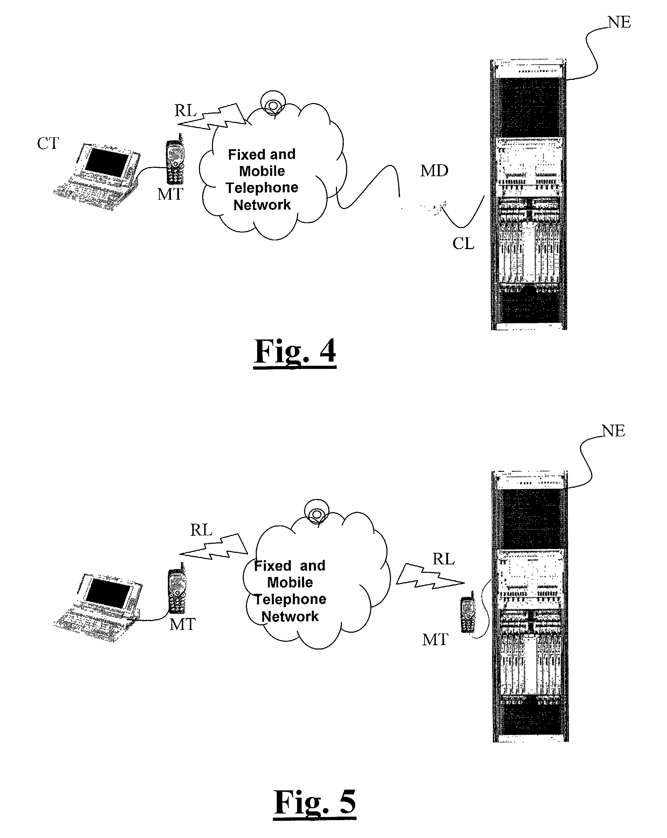

The second embodiment according to the present invention is shown in Fig. 4. The arrangement according to this embodiment comprises a Craft Terminal CT and a Network Element NE (again, the rest of the network being not shown for clarity reasons); the Craft Terminal is connected to a mobile terminal MT while the Network Element NE is connected to a modem MD. In this manner, the Network Element and the Craft Terminal are connected by a telecommunication network comprising a mobile telephone network and, possibly, a fixed telephone network.

The main advantage of this second embodiment is that there is no need to have an operator working at the place where the Network Element is placed, the Craft Terminal operator could operate also at sites where the fixed telephone line is not available. On the other side, the Network Element may be connected, if it is available, by a fixed telephone line.

The third embodiment according to the present invention is shown in Fig. 5. The arrangement according to this embodiment comprises a Craft Terminal CT and a Network Element NE (again, the rest of the network being not shown for clarity reasons); both the Craft Terminal and the Network Element NE are connected to a corresponding mobile terminal MT. In this manner, the Network Element and the Craft Terminal are connected by a telecommunication network comprising a mobile telephone network and, possibly, a fixed telephone network.

It is clear that this solution is used when the Network Element is installed at a site which is not reached by a fixed telephone network and the operator needs to remotely manage the Network Element without a fixed line.

In order to manage remotely a Network Element by a Craft Terminal through a telephone network, the remote modem should be configured in advance with an "auto response" mode function. That configuration may be done by a terminal application through the modem commands.

In the prior art arrangements there is a cable connection between the craft terminal and the network element or, when modems are used, between a modem and the craft terminal. In the present invention, the serial connection is virtualized by opening a terminal by which a call is made to the remote telephone or the remote modem. Once that the link has been established, the terminal is closed and the real craft terminal application is launched.

The main advantages of the new solution are: the NE managing is less dependent on the NE site; the more flexible remote connection allows defining a plan of maintenance activities with the consequent support cost reduction (also maintenance and upgrade times are considerably reduced). Other advantages are related to the possibility to have a remote NE control also in cases of unavailability of a fixed telephone network line and mobile phone is the only possibility. Some examples are when a NE is installed in a site on a mountain or in a forest; urgent maintenance operations from a technician who is in travel.

As it is known, in the prior-art arrangements where the connection is made by modems, manuals and proper instructions for setting-up the modems themselves are available. On the contrary, for mobile phones it is just available a software program for automatically setting up only the features which are strictly required for activating a standard data connection, such features being the only ones that are supported. Thus, in principle, there are no information about how to actuate other data connections that are different from the basic configuration. Furthermore, an operator has no visibility about the parameters that have been set up in the basic configuration. Thus, the present invention can not be performed without exercising some efforts for searching for the proper set up configuration. Unfortunately, it is realized that the proper set up configuration depends on several components, such as the mobile terminals that are used (including the manufacturers thereof, the program software that has been loaded) the transmission protocol (generally GSM or UMTS), the operative communication frequency (900, 1800 MHz)... Also important for finding the proper configuration is knowing in advance the list of features to be supported.

In addition to the above considerations relating to the "calling" mobile terminal (for which a set up software program is provided) it should be said that there is no rule for the "called" mobile terminal. This, once more, leads to say that specific tests should be made for finding out the best configuration parameters for the telephone set up.

From the experiments that have been carried out, it has become also clear that some special arrangement should be performed also in the connections between the mobile terminal and the base station which gives access to the GSM network. Also in this case, the arrangements should be found and selected on a case-by-case basis.

## Claims

1. Method for managing an element of a telecommunication network through a craft terminal using a telephone network, **characterized in that** the method comprises the step of connecting either the network element or the craft terminal by a mobile terminal and **in that** said telephone network comprises a mobile telephone network.

2. Method according to claim 1, **characterized by** further comprising the step of connecting the other of the network element and the craft terminal by a modem connected to a telephone fixed line.

3. Method according to claim 1, **characterized by** further comprising the step of connecting the other of the network element and the craft terminal by a further mobile terminal.

4. Method according to any of claims 1-3, **characterized in that** said network element is a radio transceiver.

5. System for managing an element of a telecommunication network through a craft terminal, the system comprising a telephone network, **characterized in that** it comprises a mobile terminal connected to one of said network element and said craft terminal and **in that** said telephone network comprises a mobile telephone network.

6. System according to claim 5, **characterized in that** it further comprises an additional mobile terminal connected to the other one of said network element and said craft terminal.

7. System according to claim 5, **characterized in that** it further comprises a modem connected to a telephone fixed line.

8. System according to any of claims 5-7, **characterized in that** said network element is a radio transceiver.
